# EUROPEAN PATENT APPLICATION

(11) **EP 2 857 351 A1**
(43) Date of publication of application: **08.04.2015**
(21) Application number: 13187128.7
(22) Date of filing: 02.10.2013
(51) Int. Cl.: C01B 15/013

(54) **Process for manufacturing a purified aqueous hydrogen peroxide solution**

(71) Applicant: Solvay SA, 1120 Bruxelles (BE)
(72) Inventor: The designation of the inventor has not yet been filed
(74) Representative: Vande Gucht, Anne

(57) **Abstract**

Process for manufacturing a purified aqueous hydrogen peroxide solution, in which a crude aqueous hydrogen peroxide solution is subjected to a washing operation with at least one organic solvent, and wherein an organophosphorus chelating agent is added to the organic solvent.

## Description

The present invention relates to a process for manufacturing a purified aqueous hydrogen peroxide solution.

Hydrogen peroxide is one of the most important inorganic chemicals to be produced worldwide. Its industrial applications include textile, pulp and paper bleaching, organic synthesis (propylene oxide), the manufacture of inorganic chemicals and detergents, environmental and other applications.

Synthesis of hydrogen peroxide is predominantly achieved by using the Riedl-Pfleiderer process, also called anthraquinone loop process or AO (auto-oxidation) process.

This well known cyclic process makes use typically of the auto-oxidation of at least one alkylanthrahydroquinone and/or of at least one tetrahydroalkylanthrahydroquinone, most often 2-alkylanthraquinone, to the corresponding alkylanthraquinone and/or tetrahydroalkylanthraquinone, which results in the production of hydrogen peroxide.

The first step of the AO process is the reduction in an organic solvent of the chosen quinone (alkylanthraquinone or tetrahydroalkylanthraquinone) into the corresponding hydroquinone (alkylanthrahydroquinone or tetrahydroalkylanthraquinone) using hydrogen gas and a catalyst. The mixture of organic solvents, hydroquinone and quinone species (working solution, WS) is then separated from the catalyst and the hydroquinone is oxidized using oxygen, air or oxygen-enriched air thus regenerating the quinone with simultaneous formation of hydrogen peroxide. The organic solvent of choice is typically a mixture of two types of solvents, one being a good solvent of the quinone derivative (for instance a mixture of aromatic compounds) and the other being a good solvent of the hydroquinone derivative (for instance a long chain alcohol). Hydrogen peroxide is then typically extracted with water and recovered in the form of a crude aqueous hydrogen peroxide solution, and the quinone is returned to the hydrogenator to complete the loop.

It is known to use hydrogen peroxide in the presence of a heterogeneous catalyst to convert an olefin into an oxirane, more particularly to convert propylene into propylene oxide (1,2-epoxypropane) by reaction with hydrogen peroxide. Such a process is generally performed in huge plants which consume huge amounts of hydrogen peroxide. Like many other (catalytic) organic oxidation processes, it requires pure reagents with no risk of process precipitation, i.e. a metal content of the order of 10 ppb. In the case of propylene oxide manufacture, it has namely been observed that if metals are present, like Fe (coming from the material of construction of the apparatus used) or Al (coming from the catalyst) and even in low amounts of between 50 and 200 ppb, these react with the reactives fed to the reactor and lead to the precipitation of insolubles which in turn leads to filter clogging.

Patent applications EP 529723 and EP 965562 in the name of the Applicant describe a process for manufacturing a purified aqueous hydrogen peroxide solution, in which a crude aqueous hydrogen peroxide solution is subjected to a washing operation with at least one organic solvent. In such a process, washing is intended to remove from the peroxide, working solution residuals, i.e. quinones and their degradation products. The solvents are generally those of the AO process in question used normally for dissolving the quinones in order to make working solution (the solvents being generally circulated from crude washing to main loop). The purpose of this traditional crude washing is to reduce TOC (organic matter) in the peroxide, and it has no effect on inorganic impurities (Al, Fe etc.).

On the other hand, various techniques (membrane filtration, distillation etc) are available when ultrapure peroxides are needed, but they are either too costly or not suitable for high volume (>100000 t per year) applications.

The purpose of the present invention is hence to provide an improved process for the preparation of hydrogen peroxide, in particular a new method for producing hydrogen peroxide with a low concentration of easily precipitating metals (Al, Fe, Cr...) which is not expensive and is suitable for high volumes.

The present invention therefore concerns a process for manufacturing a purified aqueous hydrogen peroxide solution, in which a crude aqueous hydrogen peroxide solution is subjected to a washing operation with at least one organic solvent, and wherein an organophosphorus chelating agent is added to the organic solvent.

The term "washing" is intended to denote any treatment, which is well known in the chemical industry, of a crude aqueous hydrogen peroxide solution with an organic solvent which is intended to reduce the content of impurities in the aqueous hydrogen peroxide solution. This washing can consist, for example, in extracting impurities in the crude aqueous hydrogen peroxide solution by means of an organic solvent in apparatuses such as centrifugal extractors or liquid/liquid extraction columns, for example, operating counter-currentwise. Liquid/liquid extraction columns are preferred. Among the liquid/liquid extraction columns, columns with perforated plates are preferred.

The expression "crude aqueous hydrogen peroxide solution" is intended to denote the solutions obtained directly from a hydrogen peroxide synthesis step or from a hydrogen peroxide extraction step or from a storage unit. The crude aqueous hydrogen peroxide solution can have undergone one or more treatments to separate out impurities prior to the washing operation according to the process of the invention. It typically has an H2O2 concentration within the range 30-45% by weight.

It is preferred to bring the organic solvent in counter-current relative to the crude aqueous hydrogen peroxide solution. The efficacy of the washing depends on the flow rate of the organic solvent. The efficacy of the washing is improved when the flow rate of the organic solvent is increased. The volume of organic solvent used for the washing is defined as the quotient of the flow rate of solvent and of the flow rate of the hydrogen peroxide solution. The volume used in the process according to the invention is generally at least 3 1 per m³ of crude aqueous hydrogen peroxide solution. Preferably, the volume is at least 25 1 per m³ of aqueous hydrogen peroxide solution. The volume is generally not more than 100 1 per m³ of aqueous hydrogen peroxide solution. The volume is preferably not more than 75 1 per m³ of aqueous hydrogen peroxide solution. The washing temperature is generally at least 10°C. It is preferred to work at a temperature of at least 20°C. Generally, the temperature is not more than 60°C, preferably not more than 40°C. The washing time depends on the size of the apparatus chosen and on the flow rate of crude aqueous hydrogen peroxide solution introduced into the apparatus.

The metals which are removed by the process are those which easily precipitate in contact with phosphates like Al, Fe and Cr; Good results are obtained for Al and/or Fe removal. Hence, "purified" means with reduced metal content, more particularly reduced Al and/or Fe content, typically in the range of the 10 ppb.

Preferably, the process of the invention comprises the following steps:
a) hydrogenation, in the presence of a catalyst, of a working solution comprising at least one organic solvent and at least one alkylanthraquinone to obtain the corresponding alkylanthrahydroquinone,
b) separation of the hydrogenated working solution comprising the alkylanthrahydroquinone from the catalyst,
c) oxidation of the recovered hydrogenated working solution from step b) to form hydrogen peroxide,
d) separation, from the working solution, of said hydrogen peroxide during and/or subsequently to said oxidation step, preferably with an aqueous medium, and
e) recycling of the recovered working solution to step a)
and the crude aqueous hydrogen peroxide solution separated in step d) is subjected to the washing operation.

The term "alkylanthraquinones" is intended to denote 9,10-anthraquinones substituted in position 1, 2 or 3 with at least one alkyl side chain of linear or branched aliphatic type comprising at least one carbon atom. Usually, these alkyl chains comprise less than 9 carbon atoms and, preferably, less than 6 carbon atoms. Examples of such alkylanthraquinones are 2-ethylanthraquinone, 2-isopropylanthraquinone, 2-sec- and 2-tert-butylanthraquinone, 1,3-, 2,3-, 1,4- and 2,7-dimethylanthraquinone, 2-iso- and 2-tert-amylanthraquinone and mixtures of these quinones.

The term "alkylanthrahydroquinones" is intended to denote the 9,10-hydroquinones corresponding to the 9,10-alkylanthraquinones specified above.

In this embodiment of the invention, the alkylanthraquinones can be dissolved in various types of solvents, especially in the solvents typically used in the working solution of the well known AO process. For instance, the alkylanthraquinones can be dissolved in a single solvent or in a mixed solvent comprising at least one aromatic solvent and at least one aliphatic or alicyclic alcohol, particularly in a mixed solvent. Aromatic solvents are for instance selected from benzene, toluene, xylene, tert-butylbenzene, trimethylbenzene, tetramethylbenzene, naphthalene, methylnaphthalene mixtures of polyalkylated benzenes, and mixtures thereof. Aliphatic or alicyclic alcohols are for example selected from amyl alcohol, nonyl alcohol, isoheptyl alcohol, diisobutylcarbinol, methylcyclohexanol, and mixtures thereof. Useful single solvents are, among others, a ketone, an ester, an ether, or mixtures thereof. Often used solvents are S-150 and/or diisobutycarbinol (DiBC), preferably a mixture of both. S-150 means a commercially available aromatic hydrocarbon solvent of type 150 from the Solvesso^{®} series. S-150 (Solvesso^{®}-150; CAS no. 64742-94-5) is known as an aromatic solvent of high aromatics which offer high solvency and controlled evaporation characteristics that make them excellent for use in many industrial applications and in particular as process fluids. The Solvesso^{®} aromatic hydrocarbons are available in three boiling ranges with varying volatility, e.g. with a distillation range of 165-181°C, of 182-207 °C or 232-295 °C. They may be obtained also naphthalene reduced or as ultra-low naphthalene grades. Solvesso^{®} 150 (S-150) is characterized as follows: distillation range of 182-207 C; flash point of 64 °C; aromatic content of greater than 99 % by wt; aniline point of 15 °C; density of 0.900 at 15 °C; and an evaporation rate (nButAc=100) of 5.3.

In a first sub-embodiment of the invention, the organic solvent used for the washing operation is a part of the working solution used in the alkylanthraquinone process.

This sub-embodiment makes it possible to modify the feed flow rate of organic solvent in the operation for washing the crude aqueous hydrogen peroxide solution obtained according to the alkylanthraquinone process. It is in fact desirable to provide a flow rate of organic solvent which is sufficient to feed the operation for washing an aqueous hydrogen peroxide solution. It is particularly desirable to be able to adjust the flow rate of organic solvent as a function of the desired washing efficacy and as a function of the amount of crude aqueous hydrogen peroxide solution to be subjected to the washing operation.

In the alkylanthraquinone process, the working solution is available in an amount which is large enough to make it possible to take an amount of organic solvent which is required to reach the desired feed flow rate of organic solvent.

The process according to this sub-embodiment of the invention has economic and technical advantages since it avoids the use of large amounts of fresh organic solvent to feed the washing step. Fresh organic solvents are more expensive than purified solvents. Large amounts are difficult to generate since it is necessary to ensure a continuous feed of fresh organic solvent and its destruction after the washing operation.

In this sub-embodiment of the invention, the organic solvent, after washing, can be subjected to a regeneration treatment. It can then be recycled into the washing step. If necessary, it can be recycled into the working solution used in the alkylanthraquinone process.

In a second sub-embodiment of the invention, the organic solvent used for the washing operation is a dedicated solvent, not part of the working solution. This sub-embodiment has the advantage that the nature of the solvent can be chosen so that it shows a synergistic effect (metal extraction) with the organophosphorus chelating agent. In that regard, other organophosphorus compounds like alkyl-phosphates or alkyl-phosphonates are preferably used as solvents. Especially when the organophosphorus chelating agent is di-(2-ethylhexyl) phosphoric acid (DEHPA or HDEHP), good results are obtained with TOP (trioctylphosphate) or TEHP (triethylhexylphosphate). Dibutyl phosphoric acid (DBPA) can also be used.

In this sub-embodiment, the dedicated solvent is not recycled/recirculated in the main loop (of peroxide production) but instead, is regenerated and recycled in the washing step or disposed in order to avoid soluble metal accumulation in the process.

The regeneration treatments mentioned above consist, for example, in subjecting the solvent to one or more extractions, and to one or more treatments with a chemical reagent which is compatible with the organic solvent, in order to destroy the impurities. The solvent regeneration is preferably done using an acidic solution for instance a nitric acid solution (HN03).

Besides the nature of the chelating agent and of the solvent, several other parameters may be adapted in order to optimize the process of the invention, namely : the pH, the amount of chelating agent, the ratio peroxide to solvent and the temperature. Preferably, the pH is acidic because this limits hydrogen peroxide decomposition and also, the solubility of the chelating agent in said hydrogen peroxide.

The present invention also relates to a process for manufacturing propylene oxide (1,2-epoxypropane) by reaction of propylene with hydrogen peroxide , said process using a hydrogen peroxide purified with a process as described above.

The present invention is illustrated in a non limitative way by the Examples below which relate to preferred embodiments thereof.

### Examples

DEHPA has been tested as a chelant to remove Al and Fe from a crude H2O2 solution having a peroxide concentration of 40% and the following metal content:
- Al = 220 ppb
- Fe = 110 ppb

### Example 1: pH optimization

A sample of hydrogen peroxide at 40% concentration is treated either with a nitric acid solution or with sodium hydroxide solution to obtain the desired pH. Then the hydrogen peroxide is mixed with the organic solution containing the solvent and the chelating agent in a plastic decanting funnel.

The funnel is then shaken during 30 min and let to decant until a good separation is obtained between the organic and the aqueous phases.

The treated hydrogen peroxide is recovered and analyzed for metal concentration by ICP. The ratio peroxide on organic phase (TOP+DEHPA) has been set equal to 5.0.

The amount of DEHPA in TOP has been set equal to 2 % by weight.

The results obtained are shown in table 1 below and in Figure 1 attached.

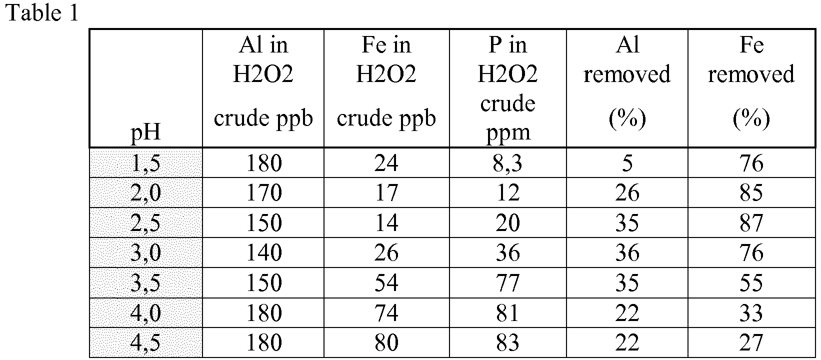

These tests show that:
- the optimum pH range for Al and Fe removal is between 2.0 and 2.5 which is close to the natural pH of crude peroxide
- when the pH increases (especially above 3.5), the chelant (complexing agent) has a tendency to dissolve in the hydrogen peroxide as can be seen by the evolution of the P content.

### Example 2: Optimization of the ratio peroxide / organic and amount of DEHPA

The same conditions as in Example 1 were used except that the pH was not adjusted before the test.

The results obtained are shown in table 2 below.

**Table 2**

| pH of H2O2 | H2O2/TOP ratio | DEHPA in TOP (%) | Al in H2O2 crude ppb | Fe in H2O2 crude ppb | P in H2O2 crude ppm | Al removed (%) | Fe removed (%) |
|---|---|---|---|---|---|---|---|
| 2 | 1 | 0 | 220 | 46 | 11 | 4 | 58 |
| 2 | 1 | 2 | 120 | 5 | 15 | 48 | 95 |
| 2 | 1 | 5 | 41 | < 5 | 25 | 82 | > 95 |
| 2 | 5 | 0 | 200 | 43 | 10 | 13 | 61 |
| 2 | 5 | 2 | 170 | 17 | 12 | 26 | 85 |
| 2 | 5 | 5 | 66 | < 5 | 16 | 71 | > 95 |
| 2 | 10 | 0 | 200 | 42 | 10 | 13 | 62 |
| 2 | 10 | 2 | 180 | 18 | 12 | 22 | 84 |
| 2 | 10 | 5 | 120 | < 5 | 12 | 48 | > 95 |

These tests show that the optimum metal removal is obtained with a low ratio peroxide to organic phase (1 to 1) and with a concentration of DEHPA of 5 % by weight in TOP.

### Example 3: Influence of solvent: Solvesso®/DiBC compared to TOP

As the solvent combination Solvesso®150/DiBC is often used on crude H2O2 production sites, it was interesting to check the efficiency of DEHPA in this type of solvent.

The tests performed at lab scale (again using the same procedure as in the previous examples) are shown in Table 3 below.

**Table 3**

| pH of H2O2 | H2O2 /solvent ratio | DEHPA in S150/DBC (%) | Al in H2O2 crude ppb | Fe in H2O2 crude ppb | P in H2O2 crude ppm | Al removed (%) | Fe removed (%) |
|---|---|---|---|---|---|---|---|
| 2 | 1 | 1 | 180 | 47 | 11 | 22 | 57 |
| 3 | 1 | 1 | 190 | 50 | 14 | 17 | 55 |
| 4 | 1 | 1 | 190 | 33 | 15 | 17 | 70 |
| 5 | 1 | 1 | 220 | 13 | 27 | 4 | 88 |
| 6 | 1 | 1 | 12 | 12 | 80 | 95 | 89 |

These results indicate two main different trends in comparison with TOP
- the optimum pH is much higher (close to 6.0) and might lead to a stability issue for hydrogen peroxide
- the amount of DEHPA required for an optimum removal is lower than the one required for TOP systems (1 % instead of 5 %).

### Example 4: Influence of complexing agents: CYANEX® compared to DEHPA

CYANEX®, a phosphonated component with a different structure than DEHPA and having the chemical formula is bis(2,4,4-trimethylpentyl)phosphinic acid (CAS : 83411-71-6) was used again in the same experimental conditions. The comparative tests performed at lab scale are shown in Table 4 below.

**Table 4**

| H2O2 /TOP ratio | CYANEX in TOP (%) | Al in H2O2 CRUDE ppb | Fe in H2O2 CRUDE ppb | P in H2O2 crude ppm | Al removed (%) | Fe removed (%) |
|---|---|---|---|---|---|---|
| 1 | 0 | 220 | 46 | 11 | 4 | 58 |
| 1 | 2 | 160 | 6 | 15 | 30 | 95 |
| 1 | 5 | 160 | 6 | 18 | 30 | > 95 |
| 5 | 0 | 200 | 43 | 10 | 13 | 61 |
| 5 | 2 | 170 | 12 | 12 | 26 | 89 |
| 5 | 5 | 160 | 5 | 14 | 30 | > 95 |
| 10 | 0 | 200 | 42 | 10 | 13 | 62 |
| 10 | 2 | 170 | 19 | 11 | 26 | 83 |
| 10 | 5 | 160 | 9 | 13 | 30 | > 95 |

These tests show that when using the best conditions optimized for DEHPA (pH=2, Ratio=1 and DEHPA=5%), the Al removal by CYANEX® is limited to 30 % instead of 82 % for DEHPA.

CYANEX® has however a high efficiency for Fe removal (> 95 %) and similar to the one obtained with DEHPA

## Claims

1. Process for manufacturing a purified aqueous hydrogen peroxide solution, in which a crude aqueous hydrogen peroxide solution is subjected to a washing operation with at least one organic solvent, and wherein an organophosphorus chelating agent is added to the organic solvent.

2. Process according to claim 1, said process comprising the following steps:
a) hydrogenation, in the presence of a catalyst, of a working solution comprising at least one organic solvent and at least one alkylanthraquinone to obtain the corresponding alkylanthrahydroquinone,
b) separation of the hydrogenated working solution comprising the alkylanthrahydroquinone from the catalyst,
c) oxidation of the recovered hydrogenated working solution from step b) to form hydrogen peroxide,
d) separation, from the working solution, of said hydrogen peroxide during and/or subsequently to said oxidation step, preferably with an aqueous medium, and
e) recycling of the recovered working solution to step a)
wherein the crude aqueous hydrogen peroxide solution separated in step d) is subjected to the washing operation.

3. Process according to claim 2, wherein the organic solvent of the alkylanthraquinone is Solvesso^{®} 150 and/or diisobutycarbinol (DiBC), preferably a mixture of both.

4. Process according to claim 2 or 3, wherein the organic solvent used for the washing operation is a part of the working solution.

5. Process according to claim 4, wherein the organic solvent used for the washing operation is recycled into the working solution.

6. Process according to claim 2 or 3, wherein the organic solvent used for the washing operation is a dedicated solvent, not part of the working solution.

7. Process according to claim 6, wherein the nature of the solvent used for the washing operation is chosen so that it shows a synergistic effect (metal extraction) with the organophosphorus chelating agent.

8. Process according to claim 7, wherein the organic solvent used for the washing operation is chosen from other organophosphorus compounds like alkyl-phosphates or alkyl-phosphonates.

9. Process according to claim 8, wherein when the organophosphorus chelating agent is di-(2-ethylhexyl) phosphoric acid (DEHPA or HDEHP) and wherein the organic solvent used for the washing operation is TOP (trioctylphosphate) or TEHP (triethylhexylphosphate).

10. Process for manufacturing propylene oxide (1,2-epoxypropane) by reaction of propylene with hydrogen peroxide, said process using a hydrogen peroxide purified by a process according to any of the preceding claims.
